Europäisches Patentamt

European Patent Office

Office européen des brevets

(11) Veröffentlichungsnummer: **0 222 142**
**A2**

(12) **EUROPÄISCHE PATENTANMELDUNG**

(21) Anmeldenummer: **86113723.0**

(22) Anmeldetag: **03.10.86**

(51) Int. Cl.⁴: **G 01 G 13/10**
**G 01 G 13/02**

(30) Priorität: **02.11.85 DE 3538900**

(43) Veröffentlichungstag der Anmeldung:
**20.05.87 Patentblatt 87/21**

(84) Benannte Vertragsstaaten:
**AT BE CH DE ES FR GB GR IT LI LU NL SE**

(71) Anmelder: **von Bennigsen-Mackiewicz, Andreas,**
**Dipl.-rer.pol.**
**Mühlenstrasse 17**
**D-3211 Banteln(DE)**

(71) Anmelder: **von Bennigsen-Mackiewicz, Christoph**
**Mühlenstrasse 17**
**D-3211 Banteln(DE)**

(72) Erfinder: **von Bennigsen-Mackiewicz, Andreas,**
**Dipl.-rer.pol.**
**Mühlenstrasse 17**
**D-3211 Banteln(DE)**

(72) Erfinder: **von Bennigsen-Mackiewicz, Christoph**
**Mühlenstrasse 17**
**D-3211 Banteln(DE)**

(74) Vertreter: **Wehser, Wulf, Dipl.-Ing. et al,**
**Patentanwälte Wehser & Fleuchaus Roscherstrasse 12**
**D-3000 Hannover 1(DE)**

(54) **Vorrichtung zum Wiegen von körnigem oder staubförmigem Shüttgut.**

(57) Ein Vorrichtung zum Wiegen von körnigem oder staubförmigem Schüttgut, bei welcher das Schüttgut von einem Silo zu einer Waage über wenigstens eine Förderleitung mittels Unterdruck gefördert wird, wobei zur Dosierung gegen Ende des Fördervorganges der geförderte Materialstrom durch Erhöhung des Luftanteiles amgemagert wird, soll so ausgebildet werden, daß mit ihr eine genaue Dosierung bei hoher Förderleistung möglich ist.

Hierzu ist erfindungsgemäß vorgesehen, daß zweite zur Waage führende, nicht mit dem Silo verbundene Förderleitung vorgesehen ist, auf welche gegen Ende des Wiegevorganges von der ersten Förderleitung umgeschaltet wird, wobei in der zweiten Förderleitung Luft in laminarer Strömung angesaugt wird und wobei ein Vorratsbehälter vorgesehen ist, der eine geringe Menge des zu fördernden Gutes enthält und in seinem unteren Bereich mit einem mechanischen, durch die Waage gegen Ende des Wiegevorganges einschaltbaren Förderer versehen ist, der mit dem der Waage abgewandten Ende der zweiten Föderleitung in Verbindung steht und das im Vorratsbehälter enthaltene Gut gleichmäßig in die zweite Förderleitung einträgt.

EP 0 222 142 A2

Croydon Printing Company Ltd.

**WEHSER & FLEUCHAUS**

PATENTANWÄLTE

European Patent Attorneys

DIPL.-ING. WULF WEHSER
3000 Hannover 1
Roscherstraße 12
☎ 0511-341449
Privat: 05143-6509

**0222142**

DIPL.-ING. LEO FLEUCHAUS
8000 München 71
☎ 089-792800

Hannover, 24. Oktober 1985

Andreas und Christoph von Bennigsen-Mackiewicz,
Mühlenstraße 17, 3211 Banteln

M 270 - Ws/Ms

## Vorrichtung zum Wiegen von körnigem oder staubförmigem Schüttgut

Die Erfindung betrifft eine Vorrichtung zum Wiegen von körnigem oder staubförmigem Schüttgut, bei welcher das Schüttgut von einem Silo zu einer Waage über wenigstens eine Förderleitung mittels Unterdruck gefördert wird, wobei zur Dosierung gegen Ende des Fördervorganges der geförderte Materialstrom durch Erhöhung des Luftanteiles abgemagert wird.

Bei einer bekannten Anordnung dieser Art ist an die Förderleitung eine Zweigleitung zur Zufuhr von Luft angeschlossen, deren Absperrventil gegen Ende des Wiegevorganges geöffnet wird, so daß zur Abmagerung des Materialstromes Zusatzluft in die Förderleitung gelangt. Auf diese Weise wird die pro Zeiteinheit zugeführte Materialmenge verringert, so daß eine Dosierung beim Abschluß des Wiegevorganges leichter möglich ist.

Nachteilig bei dieser bekannten Anordnung ist es, daß durch die Zuführung von Zusatzluft sich die Gleichmäßigkeit des Materialstromes verändert, so daß der Materialstrom mit abwechselnd unterschiedlicher Dichte in die Waage eintritt. Außerdem kann aufgrund der Förderung durch Unterdruck beim Einschalten der Zusatzluft sich die Materialmenge wenigstens teilweise vor dem Zweigrohr ablagern, so daß zeitweise überhaupt keine Materialförderung mehr stattfindet.

Der Erfindung liegt daher die Aufgabe zugrunde, eine Vorrichtung der eingangs genannten Art so auszubilden, daß mit ihr eine genaue Dosierung bei hoher Förderleistung möglich ist.

Diese Aufgabe wird erfindungsgemäß dadurch gelöst, daß eine zweite zur Waage führende, nicht mit dem Silo verbundene Förderleitung vorgesehen ist, auf welche gegen Ende des Wiegevorganges von der ersten Förderleitung umgeschaltet wird, wobei in der zweiten Förderleitung Luft in laminarer Strömung angesaugt wird und wobei ein Vorratsbehälter vorgesehen ist, der eine geringe Menge des zu fördernden Gutes enthält und in seinem unteren Bereich mit einem mechanischen durch die Waage gegen Ende des Wiegevorganges einschaltbaren Förderer versehen ist, der mit dem der Waage abgewandten Ende der zweiten Förderleitung in Verbindung

21 - 3 -

0222142

steht und das im Vorratsbehälter enthaltene Gut gleichmäßig
in die zweite Förderleitung einträgt.

Mit dieser Anordnung wird erreicht, daß zunächst mit hoher
Förderleistung durch die erste Förderleitung (Grobstromleitung)
das Gut zur Waage gefördert wird, worauf die Umschaltung auf
die zweite Förderleitung (Feinstromleitung) erfolgt und gleichzeitig der mechanische Förderer in Gang gesetzt wird, welcher
geringe Mengen des Gutes in den laminaren Strom der zweiten
Förderleitung einträgt. Hierdurch erfolgt eine gleichmäßige
Abförderung zur Waage mit einem Materialstrom, der nur eine
relativ geringe gleichmäßig verteilte Materialmenge aufweist.
Aufgrund dieses Umstandes sind äußerst feine und genaue
Dosierungen der geförderten Materialmenge beim Ende des Wiegevorganges möglich.

Für die Umschaltung kann eine Umschaltvorrichtung vorgesehen
sein, an welche die beiden Förderleitungen einerseits und
eine zur Waage führende Leitung andererseits angeschlossen sind.
Die Umschaltvorrichtung kann ein pneumatisch betätigbarer
Schieber sein oder durch Klappenventile gebildet sein.

Als mechanische Förderer können verschiedene Fördererarten Verwendung finden. So ist es beispielsweise möglich, den mechanischen
Förderer als Band- oder Kettenförderer auszubilden, der das zu fördernde Gut gleichmäßig in die zweite Förderleitung einträgt.
Eine andere Möglichkeit besteht darin, den mechanischen Förderer
als Vibrationsförderer (Vibrationsrinne) auszubilden, da auf
diese Weise eine besonders gleichmäßige Materialverteilung schon
auf dem Förderer stattfindet.

Besonders vorteilhaft ist es, wenn der mechanische Förderer ein
Schneckenförderer ist, der etwa horizontal verläuft. Ein solcher
Schneckenförderer kann in besonders leichter und kostengünstiger
Bauweise ausgeführt werden.

Sämtliche Förderer sind zweckmäßigerweise in einem rohrförmigen
Gehäuse angeordnet, dessen eine Stirnseite an die zweite Förderleitung angeschlossen ist. Hierbei ist es besonders vorteilhaft,
wenn die der zweiten Förderleitung zugewandte Stirnseite dieses
Gehäuses durch einen Ventilteller od. dgl. verschließbar ist.
Auf diese Weise kann nämlich zum Schluß des Wiegevorganges die
Materialförderung abrupt unterbrochen werden.

Hierzu ist zweckmäßigerweise ein elektropneumatisches Aggregat
vorgesehen, welches den Ventilteller in Richtung auf das stirnseitige Ende des den mechanischen Förderer enthaltenden Gehäuses
verschiebt. Dieses so gebildete Abschlußventil wird ebenfalls
von der Waage gesteuert, die als elektronisches Gerät ausgebildet
sein kann.

Eine besonders zweckmäßige Ausführungsform ergibt sich, wenn der Vorratsbehälter mit seinem Aufnahmeende an die erste Förderleitung (Grobstromleitung) angeschlossen ist. Hierbei ist es insbesondere vorteilhaft, wenn in die erste Förderleitung ein Abscheider eingesetzt ist, der beispielsweise als Zyklon ausgebildet sein kann, wobei unterhalb des Abscheiders der Vorratsbehälter angeordnet ist. Auf diese Weise wird der Vorratsbehälter selbsttätig während der Hauptförderung mit dem zu fördernden Vorratsmaterial gefüllt, so daß eine zusätzliche Füllung des Vorratsbehälters von Hand entfällt.

Ein weiterer Vorteil dieser Ausführungsform besteht darin, daß sichergestellt ist, daß der Vorratsbehälter auch stets dasselbe Schüttgut enthält wie die erste Förderleitung.

Außerdem läßt sich mit dieser Anordnung der Vorratsbehälter relativ leicht entleeren, indem nach Abschluß des letzten Wiegevorganges die zweite Förderleitung mit Unterdruck beaufschlagt wird, worauf so lange aus dem Vorratsbehälter gefördert wird, bis dieser vollständig entleert ist.

Um die Materialabfuhr mittels des mechanischen Förderers zu begünstigen, kann es zweckmäßig sein, wenn in das Förderergehäuse Düsen eingesetzt sind, die pulsatorisch mit Druckluft beaufschlagt werden. Auf diese Weise können insbesondere Brückenbildungen im Vorratsbehälter vermieden werden, wobei außerdem für eine besonders gleichmäßige Einströmung in die zweite Förderleitung Sorge getragen ist.

Mit der erfindungsgemäßen Anordnung ist es weiter möglich, an die zweite Förderleitung mehrere mechanische Förderer anzuschließen, die jeweils mit einem Vorratsbehälter und einem Abscheider sowie einer gesonderten Grobstromleitung in Verbindung stehen. Mit dieser Anordnung wird es möglich, unmittelbar aufeinanderfolgend verschiedene Materialien mittels der gemeinsamen zweiten Förderleitung genau zu dosieren, sofern in der beschriebenen Weise die nicht benutzten Förderer in ihrem Gehäuse durch das Abschlußventil abgeschlossen sind und nur dasjenige Gehäuse geöffnet ist, dessen Material in die zweite Förderleitung eingetragen werden soll.

Die aus Grobstromleitungsabschnitt, Vorratsbehälter, mechanischem Förderer, Förderergehäuse und Abschlußventil bestehenden Bauteile können jeweils zu einer Einheit zusammengefaßt werden, wobei mehrere Einheiten modulartig miteinander verbindbar sind.

Eine derartige aus mehreren Einheiten bestehende Anordnung gestattet es unter anderem auch, bestimmte Mischungen von Materialien zu fördern und auszuwiegen.

Die Erfindung wird im folgenden anhand eines Ausführungsbeispieles in der Zeichnung näher erläutert.

Fig. 1          zeigt in schematischer Darstellung eine
Ausführungsform der erfindungsgemäßen
Vorrichtung.

Fig. 2          ist die Ansicht II-II nach Fig. 1.

Fig. 3          ist die Draufsicht III-III nach Fig. 1.

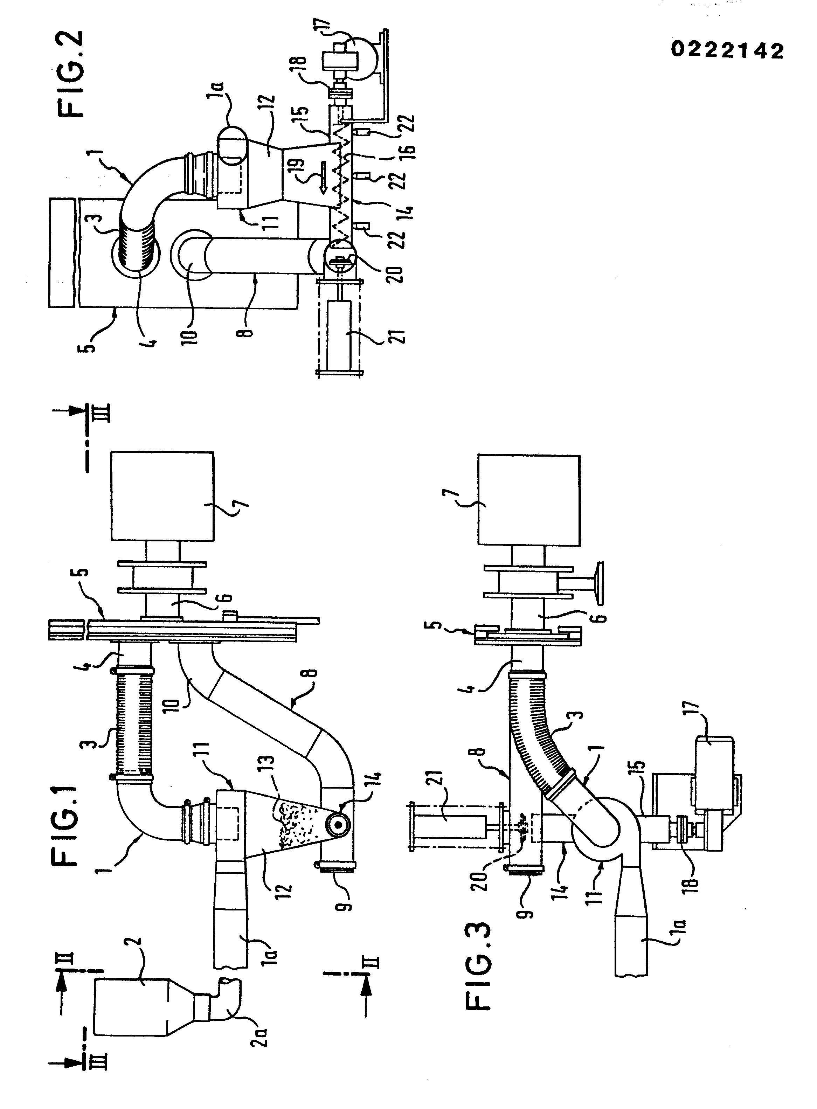

Gemäß Fig. 1 ist eine erste Förderleitung 1 vorgesehen, die mit
einem Abschnitt 1a an eine von einem schematisch im verkleinerten
Maßstab dargestellten Silo 2 kommende Leitung 2a anschließbar ist.
Das dem Silo 2 abgewandte Ende der ersten Förderleitung 1 ist über
ein flexibles Zwischenstück 3 an einen Stutzen 4 einer Umschaltvorrichtung 5 angeschlossen. Jenseits der Umschaltvorrichtung 5
führt eine Leitung 6, gegebenenfalls über Zwischenstücke od. dgl.,
zu einer schematisch angedeuteten, vorzugsweise elektronischen
Waage 7.

Ferner ist eine zweite Förderleitung 8 vorgesehen, in welcher Luft
in laminarer Strömung über einen Filter 9 od. dgl. angesaugt wird, wobei das dem Filter 9 abgewandte Ende 10 der zweiten Förderleitung 8 ebenfalls an die Umschaltvorrichtung 5 angeschlossen
ist. Es ist also mit dieser Anordnung möglich, wahlweise die
Förderleitung 1 oder die Förderleitung 8 an die Waage 7 anzu -
schließen.

Die Umschaltvorrichtung 5 kann als pneumatisch betätigbarer
Schieber ausgebildet sein, sie kann aber auch in an sich bekannter
Weise durch Ventile, vorzugsweise Klappenventile, ersetzt sein.

Die jeweilige Umschaltung kurz vor Ende des Wiegevorganges auf
die zweite Förderleitung 8 bzw. die Rückstellung auf die erste
Förderleitung 1 nach Beendigung des Wiegevorganges kann durch
die Waage 7 gesteuert werden.

Wie aus Fig. 1 weiter hervorgeht, ist in die erste Förderleitung 1 ein als Zyklon ausgebildeter Abscheider 11 eingesetzt
(vgl. auch Fig. 3), wobei unterhalb des Abscheiders 11 ein Vorratsbehälter 12 angeordnet ist, der eine geringe Menge des zu
fördernden Materiales 13 enthält, die sich während des Fördervorganges durch die erste Förderleitung 1 (Grobstromleitung) in
dem Vorratsbehälter 12 absetzt. Der Vorratsbehälter 12 steht über
einen in seinem unteren Bereich angeordneten Förderer 14 mit dem
freien Ende der zweiten Förderleitung 8 in Verbindung.

Fig. 2 ist die Ansicht II-II nach Fig. 1 und läßt erkennen, daß in dem Gehäuse 15 des Förderers 14 ein Schneckenförderer 16 angeordnet ist, der mittels eines Motors 17 (vgl. auch Fig. 3) über eine Kupplung 18 angetrieben ist. Der Schneckenförderer 16 fördert mithin das sich im Vorratsbehälter 12 sammelnde Schüttgut in Richtung des Pfeiles 19 in die zweite Förderleitung 8 hinein. Das Gehäuse 15 des Förderers 14 kann als Rohr ausgebildet sein, dessen eine in Fig. 2 links wiedergegebene Stirnseite durch einen Ventilteller 20 verschließbar ist, der von einem elektropneumatischen Aggregat 21 beaufschlagt wird.

Ferner sind in Fig. 2 in das Förderergehäuse 15 eingesetzte Düsen 22 angedeutet, die pulsatorisch mit Druckluft beaufschlagbar sind, um Brückenbildungen im Vorratsbehälter 12 zu vermeiden und für eine besonders gleichmäßige Einströmung in die zweite Förderleitung 8 Sorge zu tragen.

Die Wirkungsweise der beschriebenen Anordnung ist mithin folgende:

Zu Beginn des Wiegevorganges ist die erste Förderleitung 1, also die Grobstromleitung, über die Umschaltvorrichtung 5 an die Waage 7 angeschlossen. Während des Fördervorganges durch die

Förderleitung 1 wird über den Abscheider 11 eine geringe Menge des zu fördernden Materials in den Vorratsbehälter 12 abgeschieden. Kurz vor Ende des Fördervorganges wird durch die Waage 7 die Umschaltvorrichtung 5 betätigt, wodurch die erste Förderleitung 1 abgeschaltet und die zweite gleichfalls mit Unterdruck beaufschlagte Förderleitung 8 eingeschaltet wird, die zunächst nur Luft in laminarer Strömung ansaugt. Gleichzeitig mit der Umschaltung auf die zweite Förderleitung 8 wird aber der mechanische Förderer 14 in Gang gesetzt, der gemäß Fig. 2 in Richtung des Pfeiles 19 eine geringe Menge des im Vorratsbehälter 12 enthaltenen Gutes 13 in die zweite Förderleitung 8 einträgt. Auf diese Weise entsteht ein laminarer Materialstrom in der zweiten Förderleitung 8, die somit als Feinstromleitung dient, wobei die Materialeintragung durch Betätigung des Aggregates 21 genau dosiert unterbrochen werden kann. Die genaue Dosierung ist hierbei wegen des geringen Materialanteiles im Strom der Feinstromleitung 8 gegeben. Die Waage 7 steuert hierbei das Pneumatikaggregat 21, welches geschlossen wird, wenn das der Waage 7 vorgegebene Gewicht erreicht ist.

Die Gleichmäßigkeit der Eintragung des Materiales aus dem Vorratsbehälter 12 in die zweite Förderleitung 8 wird durch die pulsatorisch mit Druckluft beaufschlagten Düsen 22 weiter verbessert.

PATENTANWÄLTE

European Patent Attorneys

DIPL.-ING. WOLF WENGER
3000 Hannover 1
Roscherstraße 12
☎ 0511-341449
Privat: 05143-6509

DIPL.-ING. LEO FLEUCHAUS
8000 München 71
☎ 089-792800

**0222142**

Hannover, 24. Oktober 1985

Andreas und Christoph von Bennigsen-Mackiewicz,
Mühlenstraße 17, 3211 Banteln

M 270 - Ws/Ms

## Ansprüche

1. Vorrichtung zum Wiegen von körnigem oder staubförmigem Schüttgut, bei welcher das Schüttgut von einem Silo zu einer Waage über wenigstens eine Förderleitung mittels Unterdruck gefördert wird, wobei zur Dosierung gegen Ende des Fördervorganges der geförderte Materialstrom durch Erhöhung des Luftanteiles abgemagert wird, dadurch gekennzeichnet, daß eine zweite zur Waage (7) führende, nicht mit dem Silo (2) verbundene Förderleitung (8) vorgesehen ist, auf welche gegen Ende des Wiegevorganges von der ersten Förderleitung (1) umgeschaltet wird, wobei in der zweiten Förderleitung (8) Luft in laminarer Strömung angesaugt wird und wobei ein Vorratsbehälter (12) vorgesehen ist, der eine geringe Menge des zu fördernden

- 2 -

0222142

Gutes (13) enthält und in seinem unteren Bereich mit einem
mechanischen, durch die Waage (7) gegen Ende des Wiegevorganges einschaltbaren Förderer (14) versehen ist, der mit
dem der Waage (7) abgewandten Ende der zweiten Förderleitung (8)
in Verbindung steht und das im Vorratsbehälter (12) enthaltene
Gut (13) gleichmäßig in die zweite Förderleitung (8) einträgt.

2. Vorrichtung nach Anspruch 1, dadurch gekennzeichnet, daß
für die Umschaltung eine Umschaltvorrichtung (5) vorgesehen
ist, an welche die beiden Förderleitungen (1,8) einerseits
und eine zur Waage (7) führende Leitung (6) andererseits
angeschlossen sind.

3. Vorrichtung nach Anspruch 2, dadurch gekennzeichnet, daß
die Umschaltvorrichtung (5) ein pneumatisch betätigbarer
Schieber ist.

4. Vorrichtung nach Anspruch 2, dadurch gekennzeichnet, daß
die Umschaltvorrichtung durch Klappenventile gebildet ist.

5. Vorrichtung nach einem der vorhergehenden Ansprüche, dadurch
gekennzeichnet, daß der mechanische Förderer (14) als Band-
oder Kettenförderer ausgebildet ist.

6. Vorrichtung nach einem der Ansprüche 1 bis 4, dadurch gekennzeichnet, daß der mechanische Förderer als Vibrationsförderer (Vibrationsrinne) ausgebildet ist.

7. Vorrichtung nach einem der Ansprüche 1 bis 4, dadurch gekennzeichnet, daß der mechanische Förderer ein Schneckenförderer (16) ist, der etwa horizontal verläuft.

8. Vorrichtung nach einem der Ansprüche 5 bis 7, dadurch gekennzeichnet, daß der mechanische Förderer in einem rohrförmigen Gehäuse (15) angeordnet ist, dessen eine Stirnseite an die zweite Förderleitung (8) angeschlossen ist.

9. Vorrichtung nach Anspruch 8, dadurch gekennzeichnet, daß die der zweiten Förderleitung (8) zugewandte Stirnseite des Gehäuses (15) durch einen Ventilteller (20) od. dgl. verschließbar ist.

10. Vorrichtung nach Anspruch 9, dadurch gekennzeichnet, daß ein elektropneumatisches Aggregat (21) vorgesehen ist, welches den Ventilteller (20) in Richtung auf das stirnseitige Ende des den mechanischen Förderer (16) enthaltenden Gehäuses (15) verschiebt.

0222142

11. Vorrichtung nach Anspruch 10, dadurch gekennzeichnet, daß das elektropneumatische Aggregat (21) von der Waage (7) gesteuert wird.

12. Vorrichtung nach einem der vorhergehenden Ansprüche, dadurch gekennzeichnet, daß die Waage (7) als elektronisches Gerät ausgebildet ist.

13. Vorrichtung nach einem der vorhergehenden Ansprüche, dadurch gekennzeichnet, daß der Vorratsbehälter (12) mit seinem Aufnahmeende an die erste Förderleitung (1) angeschlossen ist.

14. Vorrichtung nach Anspruch 13, dadurch gekennzeichnet, daß in die erste Förderleitung (1) ein Abscheider (11) eingesetzt ist.

15. Vorrichtung nach Anspruch 14, dadurch gekennzeichnet, daß der Abscheider (11) als Zyklon ausgebildet ist.

16. Vorrichtung nach Anspruch 14 oder 15, dadurch gekennzeichnet, daß unterhalb des Abscheiders (11) der Vorratsbehälter (12) angeordnet ist.

17. Vorrichtung nach einem der Ansprüche 8 bis 16, dadurch gekennzeichnet, daß in das Förderergehäuse (15) mit Druckluft beaufschlagte Düsen (22) eingesetzt sind.

18. Vorrichtung nach Anspruch 17, dadurch gekennzeichnet, daß die Düsen (22) pulsatorisch mit Druckluft beaufschlagt werden.

19. Vorrichtung nach einem der vorhergehenden Ansprüche, dadurch gekennzeichnet, daß an die zweite Förderleitung (8) mehrere mechanische Förderer (14) angeschlossen sind, die jeweils mit einem Vorratsbehälter (12) und einem Abscheider (11) sowie einer gesonderten Grobstromleitung in Verbindung stehen.

20. Vorrichtung nach Anspruch 19, dadurch gekennzeichnet, daß die aus Grobstromleitungsabschnitt, Vorratsbehälter (12), mechanischem Förderer (14), Förderergehäuse (15) und Abschlußventil (20,21) bestehenden Bauteile jeweils zu einer Einheit zusammengefaßt sind, wobei mehrere Einheiten modulartig miteinander verbindbar sind.

FIG.2

FIG.1

FIG.3

0222142